# Europäisches Patentamt
# European Patent Office
# Office européen des brevets

(19)

(11) Veröffentlichungsnummer: **0 328 910 B1**

(12) **EUROPÄISCHE PATENTSCHRIFT**

(45) Veröffentlichungstag der Patentschrift: **16.09.92**

(51) Int. Cl.5: **F16D 23/06**

(21) Anmeldenummer: **89101319.5**

(22) Anmeldetag: **26.01.89**

(54) **Synchronisiereinrichtung für Synchrongetriebe.**

(30) Priorität: **29.01.88 US 149790**

(43) Veröffentlichungstag der Anmeldung:
**23.08.89 Patentblatt 89/34**

(45) Bekanntmachung des Hinweises auf die
Patenterteilung:
**16.09.92 Patentblatt 92/38**

(84) Benannte Vertragsstaaten:
**DE ES FR GB IT SE**

(56) Entgegenhaltungen:
DE-A- 2 510 657      DE-A- 2 538 781
DE-A- 2 820 774      DE-A- 3 125 424
DE-A- 3 127 898      GB-A- 1 204 855

(73) Patentinhaber: **DEERE & COMPANY**
**1 John Deere Road**
**Moline, Illinois 61265(US)**

(72) Erfinder: **Johnson, Douglas R.**
**2147 Rainbow Drive**
**Waterloo Iowa 50701(US)**
Erfinder: **Kruse, Randy Paul**
**1568 Lakewood**
**Troy Michigan 48083(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

**Beschreibung**

Die vorliegende Erfindung bezieht sich auf eine Synchronisiereinrichtung für ein Sychrongetriebe gemäß den Merkmalen des Oberbegriffes des Patentanspruches 1.

Es ist bekannt, Synchronisiereinrichtungen zu verwenden, um bei Schaltgetrieben eines Motorfahrzeuges ein geräuschfreies Schalten der verschiedenen Gänge zu ermöglichen.

Mit Synchronisiereinrichtung versehene Schaltgetriebe werden Synchrongetriebe genannt. In einem derartigen Synchrongetriebe ist ein Getriebezahnrad drehfest auf einer Welle gelagert, ein Schaltmuffenträger ist drehfest auf der Welle verkeilt, und eine Schaltmuffe ist derart um den Schaltmuffenträger angeordnet, daß es sich relativ zum Schaltmuffenträger axial verschieben läßt. Die innere Oberfläche der Schaltmuffe und die äußere Oberfläche des Schaltmuffenträgers und des Getriebezahnrades (bzw. eines Ausgangszylinders, der mit dem Getriebezahnrad verbunden ist) sind miteinander verzahnt, so daß bei axialer Verschiebung der Schaltmuffe in Richtung Zahnrad (oder Ausgangszylinder) die Keilverzahnung in Eingriff tritt. Dies liefert eine kraftschlüssige Verbindung zwischen Welle und Getriebezahnrad über den Schaltmuffenträger und die Schaltmuffe.

Ohne weitere Maßnahmen handelt es sich hierbei um ein Schaltgetriebe, das nicht geräuschfrei betätigbar ist. Vielmehr läßt es sich lediglich dann betätigen, wenn die Welle und das Getriebezahnrad zueinander stillstehen, da die Verzahnung der Schaltmuffe und die des Zahnrades so lange nicht in eine fluchtende Linie gebracht werden können, wie eine relative Drehbewegung zwischen Welle und Zahnrad vorhanden ist.

Die Aufgabe einer Synchronisiereinrichtung besteht nun darin, relative Rotationen zwischen Zahnrad und Schaltmuffenträger vor dem eigentlichen Schaltvorgang zu beseitigen, ohne daß beide stillgesetzt werden müssen. Die Verzahnungen der Schaltmuffe und des Zahnrades können dann auch bei bewegtem Fahrzeug geräuschfrei in Eingriff treten.

Die bekannten Synchronisiereinrichtungen verwenden Reibungskupplungen, um die relative Rotation zwischen Getriebezahnrad und Welle zu beseitigen. Die einfachste und gebräuchlichste Synchronisiereinrichtung enthält zwei aneinander angrenzende konische Oberflächen, von denen eine mit dem Getriebezahnrad und die andere mit der Schaltmuffe verbunden ist (US-PS 4 349 090 und US-PS 4 566 569). Wird die Schaltmuffe axial in Richtung des Zahnrades verschoben, so gelangen die beiden konischen Oberflächen in Eingriff, und durch Reibung wird eine relative Rotation zwischen Zahnrad und Schaltmuffe abgebaut. Hierauf kann die Keilverzahnung der Schaltmuffe in die Keilverzahnung des Zahnrades eingerückt werden.

Die Größe der Reiboberfläche, die für eine zulässige Wirkungsweise der Synchronisiereinrichtung erforderlich ist, hängt von dem Drehmoment und der Energie ab, die erforderlich sind, um das Getriebezahnrad auf die Drehzahl des Schaltmuffenträgers zu bringen. Je höher die Leistung ist, auf die das Getriebe ausgelegt ist, desto massiver ist das Getriebezahn und desto größer ist daher die erforderliche Reibungsfläche der Synchronisiereinrichtung. Insbesondere wird bei Hochleistungsgetrieben, z. B. für landwirtschaftliche Fahrzeuge und Baumaschinenfahrzeuge, die Konusgröße, die erforderlich ist, um die notwendige Reibungsoberfläche in einer Synchronisiereinrichtung vom Konustyp zu erhalten, sehr groß, wodurch die Synchronisiereinrichtung eine nicht annehmbare Größe erhielte. Einige solcher Getriebe verwenden daher anstelle des Reibungskonus geschichtete Lamellen, welche ähnlich wie Kupplungen eine große Reibungsoberfläche zur Verfügung stellen. Solch eine Technik wird beispielsweise bei bekannten Ackerschleppern eingesetzt, welche besonders große Fahrzeuge zur Verrichtung schwerer Arbeit darstellen. Alternativ hierzu lehrt die US-PS 4 413 715 eine Synchronisiereinrichtung mit einer Mischung aus Kegel-und Scheibenoberflächen.

Unabhängig von der besonderen Art der verwendeten Reibungsoberfläche machen es alle diese Synchronisiereinrichtungen erforderlich, daß die Schaltmuffe vorübergehend in ihrer Schaltbewegung gehemnt wird, so daß ihre Verzahnung so lange nicht in die Verzahnung des Getriebezahnrades eingreift, bis die Rotationsunterschiede zwischen beiden durch die Synchronisiereinrichtung beseitigt sind. Es wurden hierfür unterschiedliche Techniken entwickelt. Die erwähnten Patente schlagen hierzu mehrere unterschiedliche Lösungen vor.

Die meisten bekannten Synchronisiereinrichtungen weisen ferner eine Art Leerlaufstellungsmechanismus auf, welcher die Schaltmuffe und die Reibungsoberfläche in einer ausgekuppelten Position hält, wenn kein Gang eingelegt ist. Auch hierzu ist eine Vielzahl von Techniken entwickelt worden, die einen derartigen Leerlaufstellungsmechanismus enthalten. Einige hiervon sind in den genannten Patenten beschrieben worden.

Eine Synchronisiereinrichtung der eingangs genannten Art ist durch die DE-A-3 125 424 bekannt geworden. Bei dieser Synchronisiereinrichtung dient als Sperreinsatz eine Sperrkulisse mit Sperrlücken. Beim Verschieben der Schaltmuffe wird ein Ende eines Druckhebels in die Sperrlücke geschwenkt, wodurch eine weitere axiale Verschiebung der Schaltmuffe verhindert wird. Erst bei Gleichlauf wird der Druckhebels wieder in eine mittlere Schaltnut des Sperreinsatzes zurückgeschoben, was eine weitere axiale Verschiebung der Schaltmuffe ermöglicht.

Ein weiteres Problem, das im wesentlichen alle Synchronisiereinrichtungen betrifft, liegt darin, daß bei deren Herstellung ein wesentlicher Aufwand auf die maschinelle Bearbeitung fällt. Dies ist insbesondere bei den Komponenten der Fall, die der vorübergehenden Begrenzung der axialen Bewegung der Schaltmuffe dienen. Natürlich steigen mit der maschinellen Bearbeitung die Herstellungskosten an, so daß Synchronisiereinrichtungen relativ teure Getriebeteile darstellen.

Die der Erfindung zugrunde liegende Aufgabe wird darin gesehen, eine Synchronisiereinrichtung, insbesondere für den Hochleistungsbetrieb, der bei landwirtschaftlichen Fahrzeugen oder Baumaschinenfahrzeugen gegeben ist, der eingangs genannten Art bereitzustellen, welche mit erheblich verringertem Aufwand an mechanischer Bearbeitung herstellbar ist.

Die Aufgabe wird erfindungsgemäß durch die kennzeichnenden Merkmale des Patentanspruches 1 gelöst.

Weitere vorteilhafte Ausgestaltungen der Erfindung sind den Unteransprüchen 2 bis 22 zu entnehmen.

Die Erfindung bezieht sich ferner auf einen Sperreinsatz für eine Synchronisiereinrichtung nach Anspruch 1.

Der erfindungsgemäße Sperreinsatz kann in Verbindung mit jeder beliebigen Synchronisiereinrichtung verwendet werden. In vorteilhafter Weise können alle die komplizierten Strukturen, die erforderlich sind, um die Einzelteile der Synchronisiereinrichtung während des Synchronisiervorganges in ihrem Bewegungsablauf wenigstens zeitweise zu hemmen, sowie die Bereitstellung einer neutralen Stellung zur Vermeidung zu großer Schaltwege der Schaltmuffe auf einem kleinen Sperreinsatz, welcher vorzugsweise sehr einfach durch Gießen herstellbar ist, integriert werden. Dieser Sperreinsatz enthält vorzugsweise Führungsschultern, einen Synchronringanschlag, einen Schaltanschlag und eine Führungsausnehmung sowie ein Loch zur Aufnahme der Auslöseeinrichtung für den Fall, daß sich die Schaltmuffe in der neutralen Lage befindet. Bei dieser Ausbildung ist es bei den übrigen Teilen lediglich erforderlich, eine Lasche vorzusehen, die mit der Führungsschulter und dem Synchronanschlag in Eingriff bringbar ist, wodurch ein Verkuppeln der entsprechenden Reibungsflächen bewirkt wird, was seinerseits zur Synchronisation zwischen Schaltmuffenträger und Ausgangselement führt. Der Auslösemechanismus mit seiner Feder ist dem Sperreinsatz anzupassen, so daß ein Ende des Auslösemechanismus in die Führungsausnehmung und das Loch des Sperreinsatzes eingreift. Dies alles sind einfache Teile, die keine umfangreiche maschinelle Bearbeitung erfordern. Da sich der Sperreinsatz ohne weiteres gießen läßt, wird ein wesentlicher Betrag der maschinellen Bearbeitung völlig vermieden.

Durch besonders vorteilhafte Ausgestaltungen der Erfindung läßt sich der Synchronring zur Aufnahme mehrerer Kupplungsscheiben topfförmig ausgestalten. Die Herstellung erfolgt aus relativ dickem Metallblech durch Stanzen und Pressen. Ein derartiger Synchronring dient als Führung für die Kupplungsscheiben und preßt diese während des Synchronisiervorganges zusammen. Bisher wurden derartige Synchronringe durch Gießen und anschließende verspanende Bearbeitung hergestellt.

Entsprechend der vorliegenden Erfindung wird dagegen der Synchronring sehr einfach durch Stanzen und Pressen aus einem Teil eines Bleches hergestellt. Hierdurch ist es möglich, die für das Zusammenwirken mit dem Sperreinsatz erforderliche Lasche durch Zurückbiegen eines Teilbereiches des Synchronringes herzustellen. Auf ähnliche Weise können auch bei der zweiseitigen Synchronisiereinrichtung zusätzliche Laschen an beide Synchronringe angeformt werden, die durch vorgespannte Federn derart miteinander verbunden werden, daß sie die Synchronringe gegenseitig anziehen. All dies kann durch sehr geringe maschinelle Bearbeitung erreicht werden.

Hieraus wird deutlich, daß die spanabhebende Bearbeitung, die erforderlich ist, um eine Synchronisiereinrichtung der erfindungsgemäßen Art herzustellen, sich wesentlich gegenüber konventionellen Synchronisiereinrichtungen reduzieren läßt. Vielmehr werden bei der Herstellung der erfindungsgemäßen Synchronisiereinrichtung billige Verfahren wie Gießen und Stanzen angewandt, so daß die erfindungsgemäße Synchronisiereinrichtung ein sehr hohes Leistungs- zu Kostenverhältnis aufweist.

Anhand der Zeichnung, die ein Ausführungsbeispiel der Erfindung zeigt, sollen die Erfindung sowie weitere vorteilhafte Ausgestaltungen und Weiterbildungen der Erfindung beschrieben und näher erläutert werden.

Es zeigt:

Fig. 1    eine isometrische Explosionsdarstellung einer bevorzugten Ausbildung einer Synchronisiereinrichtung gemäß der vorliegenden Erfindung,

Fig. 2    eine Schnittperspektive der Synchronisiereinrichtung gemäß Fig. 1 in neutraler Stellung,

Fig. 3    einen Schnitt entlang der Linie 3 - 3 in Fig. 2,

Fig. 4    einen Schnitt entlang der Linie 4 - 4 in Fig. 3,

Fig. 5    eine Schnittperspektive der Synchronisiereinrichtung ähnlich wie in Fig. 2, jedoch in einer Stellung kurz nach Beginn des Schaltvorganges,

Fig. 6    einen Schnitt entlang der Linie 6 - 6 in Fig. 5,

Fig. 7    einen Schnitt entlang der Linie 7 - 7 in Fig. 6,

Fig. 8    eine Schnittperspektive der Synchronisiereinrichtung ähnlich wie in Fig. 2, jedoch in einer Stellung, in der die Synchronisation vollendet ist, jedoch vor Abschluß des Schaltvorganges,

Fig. 9    einen Schnitt entlang der Linie 9 - 9 in Fig. 8,

Fig. 10   einen Schnitt entlang der Linie 10 - 10 in Fig. 9,

Fig. 11   eine zu Fig. 9 analoge Darstellung, bei der die Schaltfunktion vollständig ausgeführt wurde,

Fig. 12   einen Schnitt entlang der Linie 12 - 12 in Fig. 11,

Fig. 13   die Vorderansicht eines Sperreinsatzes gemäß der vorliegenden Erfindung.

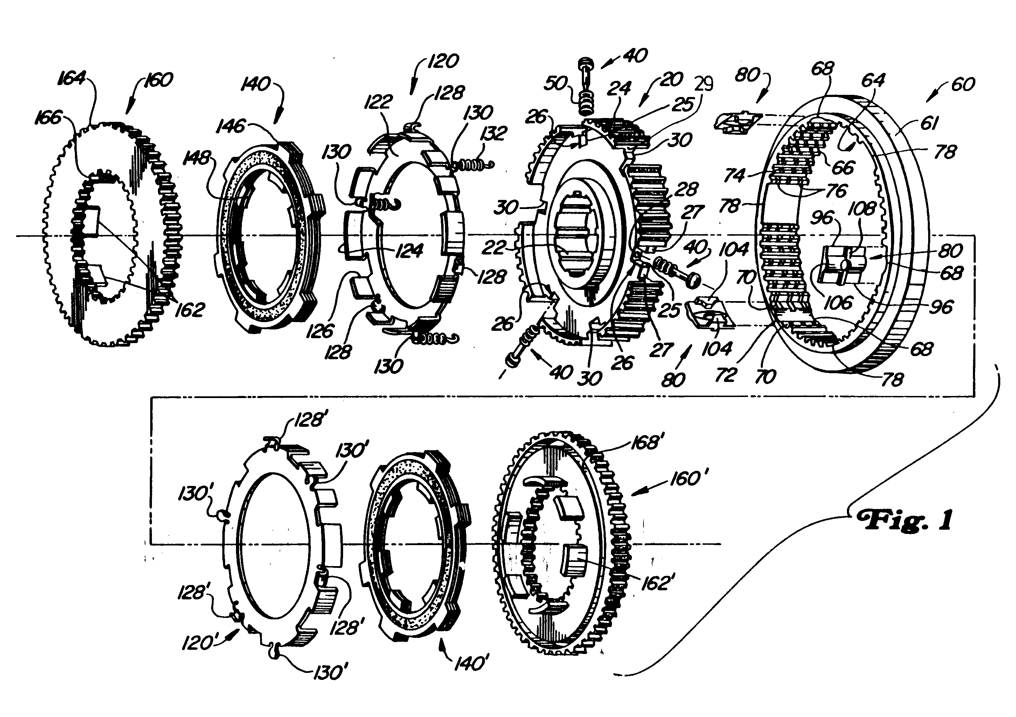

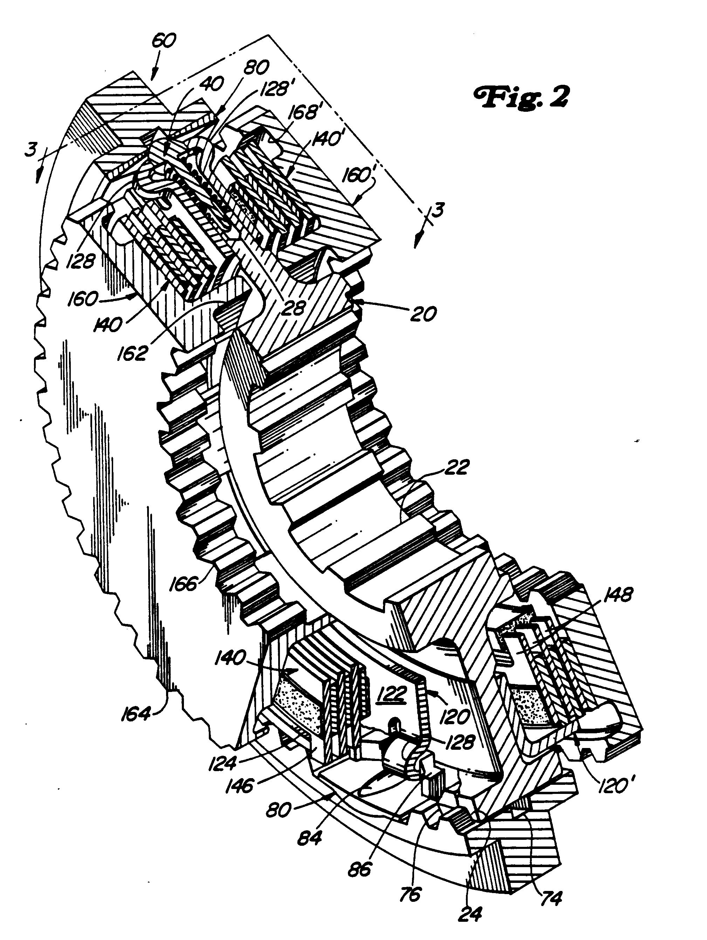

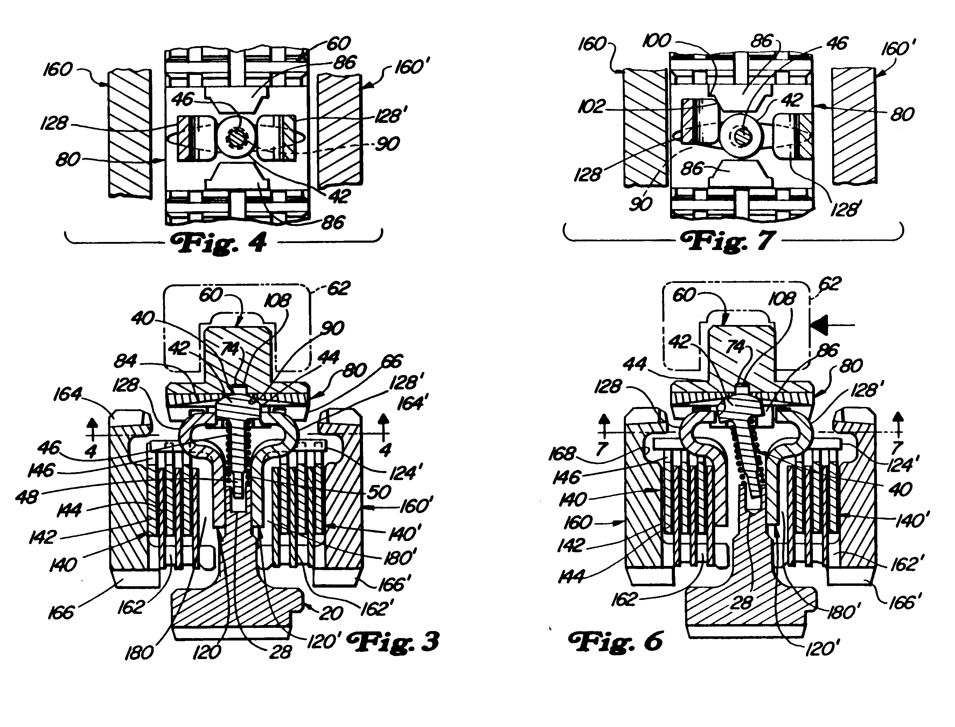

Bei der Synchronisiervorrichtung, die in Fig. 1 dargestellt ist, handelt es sich um eine zweiseitige Synchronisiereinrichtung, die geeignet ist, eines von zwei nicht gezeigten Getriebezahnrädern mit einer nicht dargestellten Welle zu verbinden. Wegen der begrenzten Abmessung der Darstellung wurde die Explosionsdarstellung der Fig. 1 in zwei Ebenen gezeichnet, wobei die Elemente, die bei fluchtender Ausrichtung aller Elemente rechts liegen würden, in der unteren Ebene dargestellt sind. Der Bequemlichkeit halber werden die Elemente auf der unteren Ebene im folgenden als die rechts liegenden Elemente bezeichnet. Diese rechts liegenden Elemente sind im wesentlichen symmetrisch zu den Elementen, die auf der linken Seite, der oberen Ebene, in Fig. 1 dargestellt sind. Sie werden daher im folgenden mit derselben Bezugsnummer wie die linksseitigen Elemente belegt und erhalten einen Strich ('). Diese rechtsseitigen Elemente werden nicht näher beschrieben, da sie im wesentlichen symmetrisch zu den linksseitigen Elementen mit der gleichen Bezugsnummer sind.

Die in Fig. 1 dargestellte Synchronisiereinrichtung besteht aus mehreren Hauptelementen:
- einem Schaltmuffenträger 20,
- drei Auslöseeinrichtungen 40 (Auslösemechanismus),
- einer Schaltmuffe 60,
- drei Sperreinsätzen 80,
- linken und rechten Synchronringen 120, 120',
- linken und rechten Kupplungsscheibenpaketen 140, 140' (jeweils mit Eingangs- und Ausgangsreibungselementen),
- linken und rechten Ausgangswalzen 160, 160' (Ausgangsteil).

Der Schaltmuffenträger 20 ist durch geeignete Mittel, z. B. eine Keilverzahnung 22, auf einer nicht dargestellten Übertragungswelle gegen Verdrehung gesichert. Ferner ist der Schaltmuffenträger 20 durch geeignete Mittel, z. B. nicht dargestellte Sperringe, gegen axiale Bewegung in Längsrichtung der Übertragungswelle gesichert. Der äußere Umfang des Schaltmuffenträgers 20 ist ebenfalls verzahnt, und diese Verzahnung 24 verläuft parallel zu der Rotationsachse der Welle. Auf dem äußeren Umfang des Schaltmuffenträgers 20 befinden sich mit Abstand zueinander drei Nuten 26, welche in ihrer Basis Löcher 28 aufweisen, die der Aufnahme der Auslöseeinrichtungen 40 dienen. Die Nuten 26 sind im wesentlichen T-förmig ausgebildet. Sie weisen Flächen 27 auf, die sich seitlich zu der Hauptnut 26 erstrecken. Ihre äußeren Seiten 29 erstrecken sich bis zur Umfangslinie des Schaltmuffenträgers 20. Sofern erforderlich, können die inneren Seitenflächen 25 der Nuten 26 mehrere nicht gezeigte Stufen aufweisen, durch welche ein zusätzlicher Freiraum geschaffen wird. Die Nuten 26 wechseln sich auf dem Umfang des Schaltmuffenträgers 20 mit Nuten 30 ab, deren Funktionsweise weiter unten beschrieben werden wird. Die Nuten 26 und 30 weisen gewöhnlich die gleiche Form auf, um die Fräsanforderungen zu vereinfachen. Dies ist jedoch nicht wesentlich.

Wie aus Fig. 3 am besten ersichtlich, hat jede Auslöseeinrichtung 40 einen abgerundeten oder kegelstumpfförmigen Kopf 42 am Ende eines im wesentlichen zylinderförmigen Abschnittes 44. Der Kopf ist an einem Stift 46 befestigt. Der Stift 46 weist einen verjüngten Bereich 48 auf, der an der zum Kopf 42 entgegengesetzten Seite liegt. Der Stift 46 wird durch eine Feder 50 umgeben. Wenn die Auslöseeinrichtung 40 eingesetzt ist, befindet sich der verjüngte Bereich 48 in dem entsprechenden Loch 28 des Schaltmuffenträgers 20. Der verjüngte Bereich 48 hat einen etwas kleineren Durchmesser als das Loch 28, so daß ein seitliches Spiel ermöglicht wird. Ein Ende der Feder 50 drückt gegen den Boden der Nut 26 und das andere Ende gegen die Unterseite des Kopfes 42, um die Auslöseeinrichtung 40 vom Mittelpunkt des Schaltmuffenträgers 40 wegzudrücken. Wenn die Synchronisiereinrichtung vollständig zusammengebaut ist, drückt jede Auslöseeinrichtung 40 gegen einen korrespondierenden Sperreinsatz 80, welcher weiter unten genauer beschrieben werden wird.

Zurückkehrend zu Fig. 1 erkennt man an der Schaltmuffe 60 eine äußere Oberfläche 61, welche so ausgebildet ist, daß sie sich durch eine Schaltgabel 62 (in Fig. 3 durch gestrichelte Linien angedeutet) in üblicher Weise verschieben läßt. Die innere Oberfläche 64 der Schaltmuffe 60 trägt eine Keilverzahnung 66, welche der Keilverzahnung 24 des Schaltmuffenträgers 20 angepaßt ist und mit dieser in Eingriff steht, sofern die Synchronisiereinrichtung zusammengebaut ist. In die innere Oberfläche 64 der Schaltmuffe 60 sind drei axial ausgerichtete Vertiefungen 68 eingelassen, die der Aufnahme des Sperreinsatzes 80 dienen. Jede Vertiefung 68 weist zwei Seitenbereiche 70 auf, welche bezüglich der zentralen Achse der Schaltmuffe 60 einen im wesentlichen konstanten Radius aufweisen. Ist die Schaltmuffe 60 groß genug, bedeutet dies aber, daß die Seitenbereiche 70 im wesentlichen flach ausgebildet sind. Der mittlere Bereich 72 jeder Vertiefung 68 ist als Zylindersegment ausgebildet, dessen Hauptachse parallel zur Achse der Schaltmuffe 60 ausgerichtet ist. In die innere Oberfläche 64 der Schaltmuffe 60 ist wenigstens eine umlaufende Nut 74 eingearbeitet, deren Radius etwas größer ist als der Radius der Seitenbereiche 70 der die Sperreinsätze 80 aufnehmenden Vertiefungen 68. Vorzugsweise sind zusätzliche Nuten 76 vorgesehen, die bei dem Eingriff der Verzahnung in einer Weise behilflich sind, die weiter unten beschrieben werden wird. Diese Nuten 76 brauchen nicht so tief zu sein wie die Nuten 74. Schließlich kann in den Bereichen 78 der Schaltmuffe 60, die der Position der Nuten 30 in dem Schaltmuffenträger 20 entsprechen, die Verzahnung weggelassen werden, da es hier keine Verzahnung auf dem Schaltmuffenträger 20 gibt, mit der eine Verzahnung der Schaltmuffe 60 in Eingriff treten könnte.

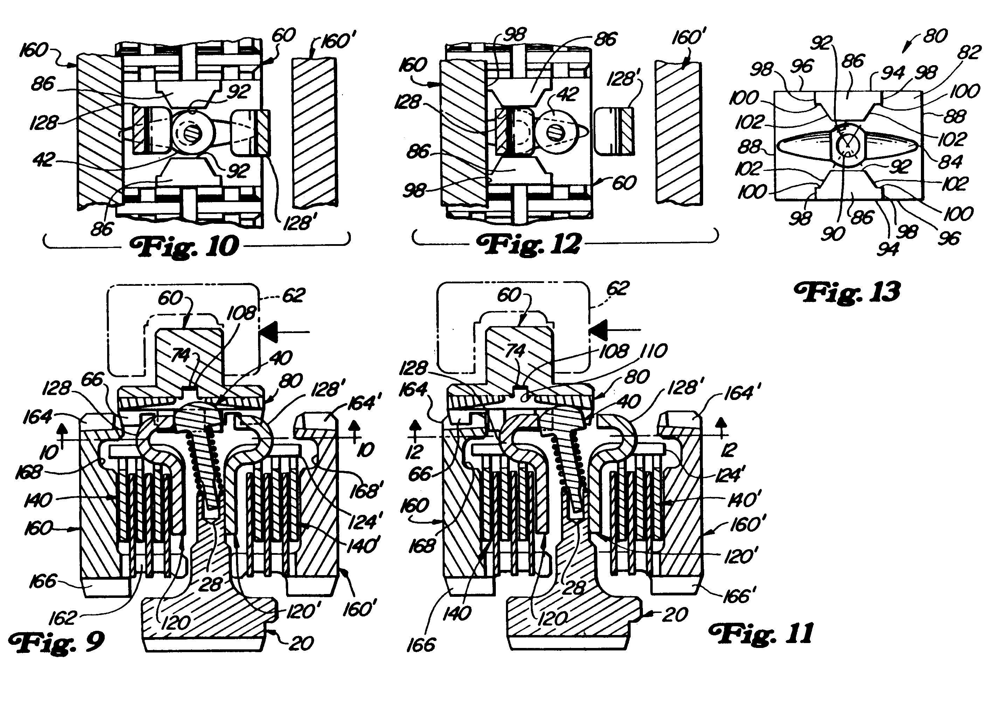

Wie es am besten aus den Figuren 3 und 13 ersichtlich ist, weist jeder Sperreinsatz 80 einen Hauptkörper 82 auf, der so geformt ist, daß er sich der Krümmung, sofern eine solche vorhanden ist, des äußeren Bereiches 70 der den Sperreinsatz 80 aufnehmenden Vertiefung 68 in der Schaltmuffe 60 anpaßt. In die obere Seite jedes Sperreinsatzes 80 ist eine Vertiefung 84 eingelassen, die dem Eingriff der entsprechenden Auslöseeinrichtung 40 dient. Ferner trägt die obere Seite zwei Vorsprünge 86, deren Funktion weiter unten beschrieben werden wird. Die Tiefe und Breite der Vertiefung 84 nimmt von den Seiten 88 des Sperreinsatzes 80 ausgehend zu dessen Mittelpunkt hin zu. In der Mitte des Sperreinsatzes 80 befindet sich ein Loch 90. Der Kopf 42 der zugehörigen Auslöseeinrichtung 40 wird durch die Vertiefung 84 mit dem Loch 90 geführt, so daß sich eine stabile Position der Auslöseeinrichtung 40 in der neutralen Stellung ergibt, wie weiter unten beschrieben werden wird.

Wie aus Fig. 13 ersichtlich, sind die Vorsprünge 86 im wesentlichen symmetrisch. Jeder Vorsprung 86 weist innere Seiten 92 und äußere Seiten 94 auf. Die inneren Seiten 92 sind im wesentlichen parallel zu den Seiten 96 des Sperreinsatzes 80 ausgerichtet und liegen etwas vom Loch 90 entfernt. Die äußeren Seiten 94 der Vorsprünge 86 fallen im wesentlichen mit den Seiten 96 des Sperreinsatzes 80 zusammen. An jedem Ende der äußeren Seitenfläche 94 sind im wesentlichen rechtwinklig hierzu und sich in den Sperreinsatz 80 erstreckende kurze Seitenflächen 98 angebracht. Diese kurzen Seitenflächen 98 dienen, wie weiter unten beschrieben werden wird, als Schaltanschläge oder Schaltanschlagmittel und werden im folgenden als solche bezeichnet. Jeder Vorsprung 86 weist zwei weitere kurze Seitenflächen 100 auf, die sich jeweils von den Schaltanschlägen 98 ausgehend und parallel zu den Seiten 96 erstrecken. Diese Seitenflächen 100 dienen, wie weiter unten beschrieben werden wird, als Synchronringanschläge oder Synchronanschlagmittel und werden im folgenden als solche bezeichnet. Schließlich werden die Enden der Synchronringanschläge 100 mit den Enden der inneren Seitenflächen 92 miteinander durch schräge Seitenflächen 102 verbunden. Diese Seitenflächen 102 dienen als Führungsschultern bzw. Blockiermittel, wie noch beschrieben werden wird, und werden im folgenden als solche bezeichnet. Vorzugsweise sind die Führungsschultern 102 derart ausgerichtet, daß sie vom Mittelpunkt des Sperreinsatzes 80 aus radial nach außen weisen, wie durch die gestrichelten Linien angedeutet wurde. Wie es am besten aus Fig. 1 ersichtlich ist, ist die Oberseite 104 jedes Vorsprunges 86 im wesentlichen flach ausgebildet.

Aus Fig. 1 geht auch hervor, daß zusätzliche Vorsprünge auf der Rückseite jedes Sperreinsatzes 80 angebracht sind. Insbesondere erstreckt sich ein zylindrischer Vorsprung 106 von einer Seite 88 zu der anderen Seite 88 des Sperreinsatzes 80. Die Form des zylindrischen Vorsprungs 106 korrespondiert mit der Form des zylindrischen Bereiches 72 in den Vertiefungen 68 der Schaltmuffe 60. Ferner ist ein im wesentlichen rechteckiger Vorsprung 108 ebenfalls auf der Rückseite des Sperreinsatzes 80 angeformt, welcher sich von der Seite 96 zu der anderen Seite 96 erstreckt und mit der Nut 74 in der Schaltmuffe 60 korrespondiert. Der rechteckige Vorsprung 108 ist in der Mitte durch das Loch 90 unterbrochen. Schließlich verläuft vorzugsweise beiderseits des Vorsprunges 108 je eine Nut 110, die am besten aus Fig. 11 ersichtlich ist und die einen Freiraum zwischen dem Sperreinsatz 80 und den Kanten der Nut 74 schafft.

Beim Zusammenbau wird jeder Sperreinsatz 80 in eine für den Sperreinsatz 80 ausgebildete Aufnahmevertiefung 68 der Schaltmuffe 60 eingefügt. Der Bereich des Hauptkörpers 82 des Sperreinsatzes 80 steht mit den Seitenbereichen 70 der Vertiefung 68 in Eingriff, der zylindrische Vorsprung 106 greift in den zylindrischen Bereich 72 der Vertiefung 68 ein, und der rechteckige Vorsprung 108 greift in die Nut 74 ein. Diese unterschiedlichen Eingriffe verhüten eine Bewegung des Sperreinsatzes 80, ausgenommen in Umfangsrichtung oder radial nach innen. Derartige Bewegungen in Umfangsrichtung oder radial nach innen werden durch den Eingriff mit dem Schaltmuffenträger 20 verhindert. Insbesondere liegen dann, wenn die Schaltmuffe 60 mit in die Vertiefungen 68 eingelegten Sperreinsätzen 80 über dem Schaltmuffenträger 20 angeordnet ist, die Oberseiten 104 der Vorsprünge 86 des Sperreinsatzes 80 auf den T-Oberflächen 27 jeder der Nuten 26, so daß radial nach innen gerichtete Bewegungen des Sperreinsatzes 80 verhindert werden. Auf ähnliche Weise liegen die Seitenflächen 96 der Sperreinsätze 80 an den äußeren Seiten 29 jeder Nut 26 an, wodurch eine relative Bewegung der Sperreinsätze 80 in Umfangsrichtung verhindert wird. Auf diese Weise ist der Sperreinsatz 80 relativ zum Schaltmuffenträger 20 und zur Schaltmuffe 60 präzise durch die verschiedenen Vorsprünge und Vertiefungen, die in dem Schaltmuffenträger 20, der Schaltmuffe 60 und dem Sperreinsatz 80 ausgebildet sind, positioniert.

Die Sperreinsätze 80 werden vorzugsweise durch Gießen geformt, so daß das Erfordernis teurer Fräsarbeit vermieden werden kann. Wie aus der nachfolgenden Beschreibung der Erfindung offenbar werden wird, müssen die Sperreinsätze 80 aus Material ziemlich hoher Härte bestehen. Es hat sich gezeigt, daß SAE 8620 carbonisierter und abgeschreckter Stahl geeignet ist. Eine zusätzliche Funktion des zylindrischen Vorsprunges 106 liegt darin, daß zusätzliches Material unter der Führungsvertiefung 84 angeordnet ist. Hierdurch wird sichergestellt, daß das Material auch an dieser Stelle dick genug bleibt, um auch an den tiefer liegenden Stellen der Vertiefung 84 die erforderliche Festigkeit zu haben.

Der Synchronring 120 wird durch Stanzen und anschließendes Drücken aus dickem Metallblech hergestellt. Ein sich radial erstreckender Bereich 122 trennt den Schaltmuffenträger 20 vom Kupplungsscheibenpaket 140. Mehrere sich axial erstreckende Bereiche 124 umgeben das Kupplungsscheibenpaket 140 in Umfangsrichtung. Zwischenräume 126 sind ringsum auf dem Mantel des Synchronringes 120 beabstandet angeordnet, um in das Kupplungsscheibenpaket 140 einzugreifen. An drei Stellen auf dem Umfang des Synchronringes 120 wurde das Metall, welches an sich den umlaufenden Bereich 124 bildet, zurückgebogen, um umgebogene Laschen 128 zu bilden, von denen jede an den zylindrischen Abschnitt 44 des Kopfteils 42 der korrespondierenden Auslösevorrichtung 40 angreift, was am besten aus den Figuren 3 und 4 hervorgeht. Obwohl die Laschen 128 einfach als gerades Metallstück ausgebildet sein könnten, werden sie vorzugsweise aus Steifigkeitsgründen in eine U-Form gebogen. Die Laschen können auch durch Punktverschweißung an den entsprechenden umlaufenden Bereichen 124 des Synchronringes 120 befestigt sein, um zusätzliche Steifigkeit zu gewährleisten. Härteverfahren sind ebenfalls zweckmäßig. Laschen 130, die am besten am rechten Synchronring 120' der Fig. 1 zu erkennen sind, stehen radial nach außen über die Umfangsmantellinie des Synchronringes 120 hervor. Rückholfedern 132 sind an jeder der Laschen 130 befestigt und erstrecken sich durch die Nut 30 in dem Schaltmuffenträger 20, um eine Verbindung zu der Lasche 130' des rechtsseitigen Synchronringes 120' herzustellen. Hierdurch werden die zwei Synchronringe 120, 120' zueinander angezogen. Die Laschen 130 brauchen normalerweise nicht gehärtet zu werden, wie dies bei den Laschen 128 der Fall ist.

Das Kupplungsscheibenpaket 140 ist aus gewöhnlichen Kupplungsscheiben 142 hergestellt, zwischen denen gewöhnliche Trennscheiben 144 angeordnet sind, wie es am besten aus Fig. 3 hervorgeht. Hierzu können beliebige geeignete Kupplungsscheiben und Trennscheiben Verwendung finden. Wie aus Fig. 1 hervorgeht, stehen über die Kupplungsscheiben 142 die üblichen Streifen 146 über, die geeignet sind, um in die Zwischenräume 126 einzugreifen, welche im umlaufenden Bereich 124 des Synchronringes 120 angeordnet sind. Hierdurch wird die Drehung des Synchronringes 120 mit den Kupplungsscheiben 142 sichergestellt. Die Trennscheiben 144 weisen ähnliche Streifen 148 auf, welche mit der Ausgangswalze 160 in Eingriff stehen.

Die Ausgangswalze 160 trägt mehrere sich axial erstreckende Streifen 162, welche an der Innenseite des Kupplungsscheibenpaketes 140 anliegen. Die Streifen 162 stehen mit den Streifen 148 in Eingriff, wodurch eine gemeinsame Drehung der Ausgangswalze 160 und der Trennscheiben 144 sichergestellt wird. Auf dem äußeren Mantel der Ausgangswalze 160 befindet sich eine Keilverzahnung 164, welche der Keilverzahnung 24 des Schaltmuffenträgers 20 entspricht. Durch axiale Bewegung der Schaltmuffe 60 kann die Keilverzahnung 66 der Schaltmuffe 60 mit der Keilverzahnung 164 der Ausgangswalze in Eingriff gebracht werden. Die Keilverzahnung 164 und/oder die Keilverzahnung 66 sind vorzugsweise an ihren Enden abgeschrägt, um den Eingriff zu erleichtern, was am besten aus Fig. 3 hervorgeht. Die Ausgangswalze 160 ist zur gemeinsamen Umdrehung mit einem nicht dargestellten Getriebezahnkranz verbunden. Die Verbindung erfolgt beispielsweise über eine Zahnverkeilung 166 an der Innenfläche der Ausgangswalze 160. Vorzugsweise befindet sich kurz unterhalb des äußeren Umfanges der Ausgangswalze 160 eine umlaufende Nut 168, die am besten bei der rechten Ausgangswalze 160' zu erkennen ist. Diese Nut 168 liefert einen Freiraum für die Enden der umlaufenden Bereiche 124 des Synchronringes 120.

## Wirkungsweise

Die Wirkungsweise der oben beschriebenen bevorzugten Ausbildung der erfindungsgemäßen Synchronisiereinrichtung wird im folgenden anhand der Figuren 2 bis 12 näher beschrieben.

Die Figuren 2 bis 4 veranschaulichen die Synchronisiereinrichtung in einer neutralen Stellung. In dieser Stellung ziehen die Federn 132 die beiden Synchronringe 120, 120′ zueinander, so daß sie an dem Schaltmuffenträger 20 anliegen. Hierdurch entstehen Zwischenräume 180, 180′ zwischen den Synchronringen 120, 120′ und ihren entsprechenden Kupplungsscheibenpaketen 140, 140′, wie es Fig. 3 zeigt. Dies bedeutet wiederum, daß die Kupplungsscheiben 142, 142′ sich relativ zu den Trennscheiben 144, 144′ verdrehen lassen, so daß keine kraftschlüssige Verbindung zwischen dem Schaltmuffenträger 20 und einer der beiden Ausgangswalzen 160, 160′ besteht. Liegt keine Kraft an der Schaltmuffe 60 an, so wird die Synchronisiereinrichtung in dieser Lage gehalten, da der Kopf 42 der Auslöseeinrichtung 40 fest in dem Loch 90 des Sperreinsatzes 80 gehalten wird.

Um die Synchronisiereinrichtung einzurücken, wird eine Schaltgabel 62 verwendet, durch welche die Schaltmuffe 60 in Richtung einer der beiden Ausgangswalzen 160, 160′ in der üblichen Weise bewegt wird. Solch eine Schaltgabel und der Mechanismus zu deren Betätigung sind dem Durchschnittsfachmann gut bekannt und werden im folgenden nicht näher beschrieben.

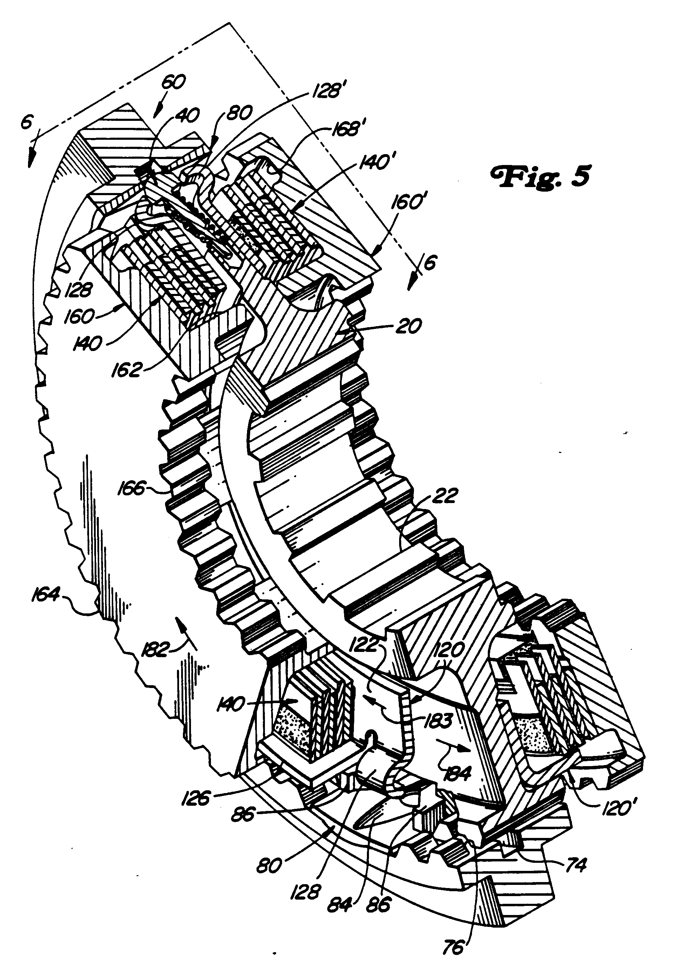

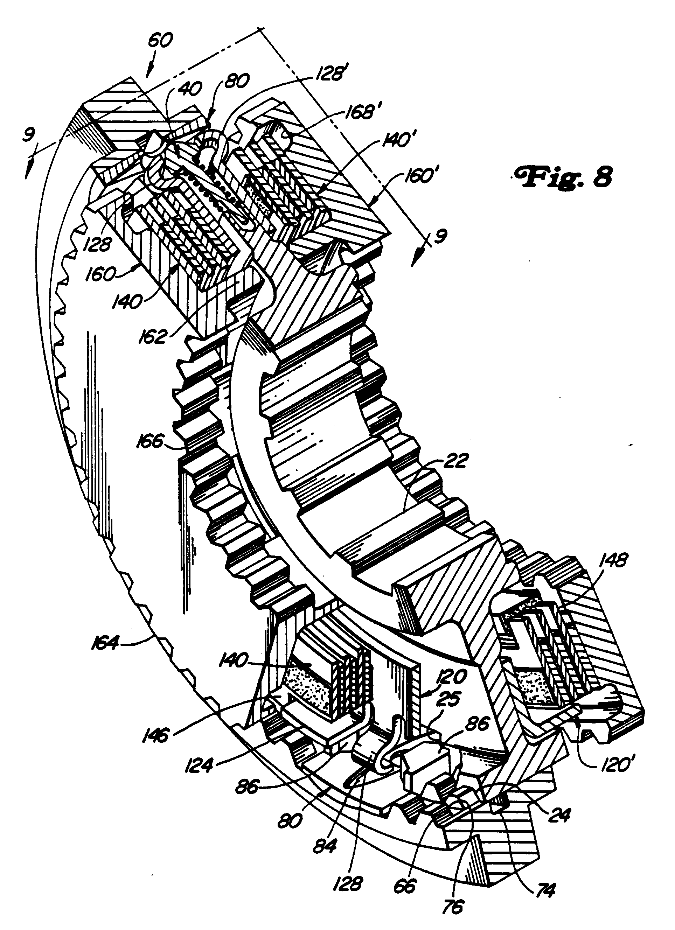

Die Figuren 5 bis 7 verdeutlichen die Synchronisiereinrichtung zu einem Zeitpunkt kurz nach Beginn der Schaltoperation, durch die die Ausgangswalze 160 mit dem Schaltmuffenträger 20 verbunden werden soll. Die Schaltgabel 62 bewegt die Schaltmuffe 60 in Richtung Ausgangswalze 160, welche sich in den Figuren auf der linken Seite befindet. Mit der Verschiebung der Schaltmuffe 60 nach links wird auch der Kopf 42 der Auslöseeinrichtung 40 nach links gedrückt. Das Spiel zwischen dem verjüngten Bereich des Stiftes 46 und dem Loch 28 in dem Schaltmuffenträger 20 erlaubt ein leichtes Verkippen der Auslösevorrichtung 40, was am besten aus Fig. 6 hervorgeht. Dieses Verkippen wird ferner durch die gewölbte Oberfläche des Kopfes 42 unterstützt. Wird die Auslöseeinrichtung 40 nach links gedrückt, so preßt sich sein zylindrischer Abschnitt 44 gegen die Lasche 128 des Synchronringes 120. Hierdurch wird der Synchronring 120 gegen das Kupplungsscheibenpaket 140 gedrückt, wodurch der bestehende Zwischenraum 180 beseitigt wird. Weiterer Druck auf die Lasche 128 bewirkt einen reibenden Eingriff zwischen den Kupplungsscheiben 142 und den Trennscheiben 144.

Besteht eine relative Drehbewegung zwischen dem Schaltmuffenträger 20 und der Ausgangswalze 160, so wird durch diesen anfänglichen reibenden Eingriff der Synchronring 120 angetrieben und in eine solche Drehrichtung verdreht, in die die Ausgangswalze 160 relativ zum Schaltmuffenträger 20 rotiert. Zum Zwecke der vorliegenden Beschreibung wird angenommen, daß sich der Schaltmuffenträger 20 und die Ausgangswalze 160 relativ zueinander in die durch die Pfeile 182, 184 in Fig. 5. weisenden Richtungen bewegen. Dies führt dazu, daß durch den anfänglichen reibenden Eingriff der Synchronring 120 in Richtung des Pfeiles 183 verdreht wird. Hierbei stößt zunächst die Lasche 128 gegen die Führungsschulter 102 des Vorsprunges 86, die auf der in Pfeilrichtung 183 liegenden Seite des Sperreinsatzes 80 liegt. Bei genügender Drehzahldifferenz zwischen Schaltmuffenträger 20 und Ausgangswalze 160 bewegt sich die Lasche 128 weiter in diese Richtung, bis sie gegen den Synchronringanschlag 100 (siehe Fig. 7) oder die innere Seitenfläche 25 der Nut 26 in dem Schaltmuffenträger 20, welcher ungefähr mit dem Synchronringanschlag ausgerichtet ist, wie es am besten aus Fig. 8 hervorgeht, stößt. Dieser Punkt begrenzt das weitere Fortschreiten der Lasche 128. Weiterer reibender Eingriff zwischen den Kupplungsscheiben 142 und den Trennscheiben 144 bewirkt dann eine Abnahme der relativen Drehung zwischen dem Schaltmuffenträger 20 und der Ausgangswalze 160.

Während dieser Synchronisationsprozeß erfolgt, ist die Schaltmuffe 60 daran gehindert, sich weiter in Richtung der Ausgangswalze 160 zu bewegen, da die Lasche 128 gegen den Vorsprung 86 des Sperreinsatzes 80 anstößt. Während der von der Schaltmuffe 60 ausgehende Druck tendenziell versucht, die Lasche 128 entlang der Führungsschulter 102 herunter in Richtung der Mitte des Sperreinsatzes 80 zu drücken, überwindet die Reibungskraft, die auf den Synchronring 120 wirkt, ohne weiteres die erstgenannte Kraft und hält die Lasche 128 weiterhin oben gegen den Synchronringanschlag 100.

Es ist zu beachten, daß während dieses ganzen Vorganges die Rückholfedern 132 den rechtsseitigen Synchronring 120′ gegen den Schaltmuffenträger 20 drücken. Der Zwischenraum 180′ bleibt bestehen, so daß hier kein reibender Eingriff des Kupplungsscheibenpaketes 140′ besteht und die Ausgangswalze 160′ unbeeinflußt bleibt.

Schließlich beseitigt der reibende Eingriff zwischen Kupplungsscheiben 142 und Trennscheiben 144 eine relative Drehung zwischen dem Schaltmuffenträger 20 und der Ausgangswalze 160, d. h. beide sind synchronisiert. Dies zeigen die Figuren 8 bis 10. Wirkt keine Reibungskraft mehr auf den Synchronring 120, um die Lasche 128 gegen den Synchronringanschlag 100 oder die Führungsschulter 102 zu drücken, so wird die Lasche 128 infolge des weiterhin anstehenden nach links gerichteten Druckes der Schaltmuffe 60 gemeinsam mit der Kraft der Rückholfeder 132 entlang der Führungsschulter 102 herunter in Richtung zur Mitte der Sperreinsatzes 80 gedrückt. Wie es am besten aus Fig. 10 ersichtlich ist, ist die Lasche 128 so bemessen, daß sie schmaler ist als der Abstand zwischen den inneren Seitenflächen 92 der beiden Vorsprünge 86 des Sperreinsatzes 80. Wenn daher die Lasche 128 sich entlang der Führungsschulter 102 herunterbewegt hat und zu dem Kanal, welcher sich zwischen den inneren Seitenflächen 92 ausbildet, ausgerichtet hat, verhindern die Vorsprünge 96 nicht mehr die axiale Bewegung der Schaltmuffe 60, so daß die Schaltmuffe 60 weiter in Richtung der Ausgangswalze 160 bewegt werden kann. Die Keilverzahnung 66 auf der Schaltmuffe 60 tritt dann in Eingriff mit der Keilverzahnung 164 auf der Ausgangswalze 160, so daß eine kraftschlüssige Verbindung zwischen dem Schaltmuffenträger 20 und der Ausgangswalze 160 geschaffen ist.

Aus den Figuren 11 und 12 ist ersichtlich, daß die Schaltmuffe 60 durch auf den Vorsprüngen 86 des Sperreinsatzes 80 angeformte Schaltanschläge 98 daran gehindert wird, sich über die Ausgangswalze 160 hinauszubewegen. Wenn die Schaltmuffe 60 nach links verschoben wird, stoßen die Schaltanschläge 98 schließlich gegen die Oberfläche der Ausgangswalze 160 und verhindern so eine weitere Bewegung in diese Richtung. Eine Bewegung der Schaltmuffe 60 in diese Lage treibt auch die Auslöseeinrichtungen 40 herunter in die Schaltmuffenträger 20, da sie an den Vertiefungen 84 in den Sperreinsätzen 80 entlanggleiten und aus diesen herausgedrückt werden. Nun können auch die Ränder der Nut 76 in der Schaltmuffe 60, die auf der Seite der Ausgangswalze 160 liegt, ihre Funktion aufnehmen und dabei behilflich sein, die Schaltmuffenverzahnung 66 mit der Ausgangswalzenverzahnung 164 durch einen sehr geringen Angriff an der Verzahnung 164 einzurasten.

Um zurück in die neutrale Lage zu gelangen, wird die Schaltmuffe 60 einfach nach rechts bewegt, bis sie sich in der Lage, die in den Figuren 2 bis 4 gezeigt ist, befindet. Hierbei bewegen sich die Ausdlöseeinrichtungen 40 in die tieferen Bereiche der Vertiefungen 84 der Sperreinsätze 80. Sie nehmen schließlich wieder ihre stabile Lage in den Löchern 90 ein. Gleichzeitig ziehen die Rückholfedern 132 den Synchronring 120 gegen den Schaltmuffenträger 20 und erzeugen so wiederum den Zwischenraum 180.

Das Schalten der Synchronisiereinrichtung, um den Schaltmuffenträger 20 mit der Ausgangswalze 160′ zu verbinden, erfolgt im wesentlichen genauso wie die beschriebene Schaltoperation, bei der die Ausgangswalze 160 in Eingriff gebracht wurde. Daher wird dieser Vorgang hier nicht mehr näher erläutert.

Auch wenn die Erfindung hier lediglich an einem bestimmten Ausführungsbeispiel beschrieben wurde, liegt es auf der Hand, daß eine Vielzahl von Modifikationen ausgeführt werden kann. Hier wurde zwar der Sperreinsatz und die Auslöseeinrichtung im Zusammenhand mit einer Vielscheiben-Synchronisiereinrichtung beschrieben, derselbe Mechanismus kann aber auch mit konischen oder mit synchronisiereinrichtungen anderen Typs verwendet werden. Hierbei ist es lediglich erforderlich, daß ein zu der Lasche 128 äquivalentes Teil an dem Teil angebracht wird, das die Reibungsoberfläche trägt, welche sich im wesentlichen mit der gleichen Geschwindigkeit dreht wie der Schaltmuffenträger 20. Für Synchronisiereinrichtungen des Konustypes ist dies der konische Synchronring. Der durch die Erfindung sehr vereinfachte Sperr- und Auslösemechanismus kann mit einer beliebig gestalteten synchronisiereinrichtung verwendet werden und ist nicht lediglich auf eine Vielscheiben-Synchronisiereinrichtung begrenzt.

Es wurde zwar beschrieben, daß der Sperreinsatz an der Schaltmuffe und die Auslöseeinrichtung an dem Schaltmuffenträger angebaut sind, dennoch können diese Elemente gerade die umgekehrte Position einnehmen. Da der Schaltmuffenträger und die Schaltmuffe immer miteinander rotieren, gibt es kein Problem hinsichtlich der winkelförmigen Position, die durch eine solche Modifikation auftreten könnte.

Obgleich die beschriebene bevorzugte Ausbildung eine Zweirichtungs-Synchronisiereinrichtung darstellt, läßt sich die vorliegende Erfindung auch bei einer Einrichtungs-Synchronisiereinrichtung anwenden. Alle Elemente, die mit einem ′ beschrieben wurden, können dann einfach entfallen. Die Rückholfeder 132 könnte vorzugsweise direkt mit dem Schaltmuffenträger 20 verbunden werden, da hierbei der rechtsseitige Synchronring 120′ entfällt. Auch die Flächen 98, 100, 102 auf der rechten Seite der Vorsprünge 86 des Sperreinsatzes 80 können, falls dies gewünscht wird, in einer solchen Synchronisiereinrichtung entfallen.

**Patentansprüche**

1. Synchronisiereinrichtung für Synchrongetriebe mit einem Schaltmuffenträger (20), einer Schaltmuffe (60), die bezüglich des Schaltmuffenträgers (20) drehfest und axial verschiebbar angeordnet ist, wenigstens einem Ausgangsteil (160), welches sich gegen den Schaltmuffenträger (20) verdrehen läßt, wenigstens einem Eingangsreibungselement (120, 142), welches sich sowohl gegen den Schaltmuffenträger (20) als auch gegen das Ausgangsteil (160) verdrehen läßt, wenigstens einem Ausgangsreibungselement (144), welches drehfest mit dem Ausgangsteil (160) verbunden ist, wenigstens einem Auslösemechanismus (40), welcher entweder an dem Schaltmuffenträger (20) oder an der Schaltmuffe (60) angebracht ist und gegen das jeweils andere Teil (20, 60) verspannt ist und welcher durch eine axiale Bewegung der Schaltmuffe (60) in Richtung des Eingangsreibungselementes (120, 142) dieses derart beeinflußt, daß es mit dem Ausgangsreibungselement (144) in Reibverbindung gebracht wird, und mit wenigstens einem Sperreinsatz (80), der an dem anderen Teil (20, 60) an einer Stelle befestigt ist, an der der Auslösemechanismus (40) angreift, derart, daß der Auslösemechanismus (40) vorgespannt ist und gegen den zugehörigen Sperreinsatz (80) drückt, wobei der Sperreinsatz (80) eine Vertiefung (84), die der Führung des zugehörigen Auslösemechanismus (40) bei axialer Verschiebung der Muffe (60) relativ zum Schaltmuffenträger (20) dient, Synchronanschlagmittel (100) zur Begrenzung der Verdrehung des Eingangsreibungselementes (120, 142) relativ zum Schaltmuffenträger (20) und Blockiermittel (102) zur Begrenzung der axialen Bewegung der Schaltmuffe (60) relativ zum Schaltmuffenträger (20), sofern der Schaltmuffenträger (20) und das Ausgangsteil (160) sich relativ zueinander drehen, aufweist, dadurch gekennzeichnet, daß das Eingangsreibungselement (120, 142) wenigstens eine abstehende Lasche (128) aufweist, die mit dem wenigstens einen Auslösemechanismus (40) in Eingriff bringbar ist, um das Eingangsreibungselement (120, 142) einzurücken, und daß die Blockiermittel (102) des Sperreinsatzes (80) zur Begrenzung der axialen Bewegung der Schaltmuffe (60) mit der Lasche (128) zusammenwirken.

2. Synchronisiereinrichtung nach Anspruch 1, dadurch gekennzeichnet, daß der wenigstens eine Auslösemechanismus (40) derart ausgebildet ist, daß er bei axialer Bewegung der Schaltmuffe (60) in Richtung des Ausgangsteils (160) gegen die entsprechende Lasche (128) drückt, woraufhin das wenigstens eine Eingangsreibungselement (120, 142) gegen das wenigstens eine Ausgangsreibungselement (144) gepreßt wird.

3. Synchronisiereinrichtung nach Anspruche 1 oder 2, dadurch gekennzeichnet, daß der wenigstens eine Auslösemechanismus (40) an dem Schaltmuffenträger (20) und der wenigstens eine Sperreinsatz (80) an der Schaltmuffe (60) festlegbar sind.

4. Synchronisiereinrichtung nach Anspruch 3, dadurch gekennzeichnet, daß mehrere Auslösemechanismen (40) auf dem Umfang des Schaltmuffenträgers (20) verteilt angeordnet sind und sich im wesentlichen radial erstrecken und daß entsprechend mehrere Sperreinsätze (80) auf einem inneren Umfang der Schaltmuffe angeordnet sind.

5. Synchronisiereinrichtung nach einem der Ansprüche 1 bis 4, dadurch gekennzeichnet, daß das wenigstens eine Eingangsreibungselement einen Synchronring (120) und mehrere mit diesem zwecks gemeinsamer Drehung in Verbindung stehende Kupplungsscheiben (142) umfaßt, daß die wenigstens eine Lasche (128) an dem Synchronring (120) angeformt ist und daß das wenigstens eine Ausgangsreibungselement mehrere Trennscheiben (144) enthält, welche in die Kupplungsscheiben (142) eingeschichtet sind.

6. Synchronisiereinrichtung nach Anspruch 5, dadurch gekennzeichnet, daß der Synchronring (120) aus einem topfförmigen Metallring besteht und die wenigstens eine Lasche (128) durch Zurückbiegen eines Randbereiches des Synchronringes (120) gebildet ist.

7. Synchronisiereinrichtung nach Anspruch 6, dadurch gekennzeichnet, daß die wenigstens eine Lasche (128) U-förmig ausgebildet ist und ein freies Ende des U mit dem entsprechenden Auslösemechanismus (40) zusammenwirkt.

8. Synchronisiereinrichtung nach einem der Ansprüche 1 bis 7, dadurch gekennzeichnet, daß diese zweiseitig ausgebildet ist und wenigstens ein weiteres Ausgangsteil (160'), wenigstens ein zusätzliches Eingangsreibungselement (120', 142') und wenigstens ein zusätzliches Ausgangsreibungselement (144') enthält, wobei die sich jeweils entsprechenden Teile bezüglich der Drehachse beiderseits und symmetrisch zum Schaltmuffenträger (20) angeordnet sind und die Schaltmuffe (60) wahlweise mit einem der Ausgangsteile (160, 160') in Eingriff bringbar ist.

9. Synchronisiereinrichtung nach einem der Ansprüche 1 bis 8, dadurch gekennzeichnet, daß Rückholmittel (132) zum Vorspannen des wenigstens einen Eingangsreibungselementes (120, 142) und gegebenenfalls des wenigstens einen zusätzlichen Eingangsreibungselementes (120', 142') in Richtung Schaltmuffenträger (20) vorgesehen sind.

**10.** Synchronisiereinrichtung nach Anspruch 9, dadurch gekennzeichnet, daß wenigstens eine zusätzliche Lasche (130, 130') auf jedem Eingangsreibungselement (120, 142; 120', 142') angebracht ist und daß das Rückholmittel aus wenigstens einer Feder (132) besteht, die die zusätzlichen Laschen (130, 130') der sich gegenüberliegenden Eingangselemente (120, 142; 120', 142') miteinander verbinden und zueinander ziehen.

**11.** Synchronisiereinrichtung nach einem der Ansprüche 1 bis 10, dadurch gekennzeichnet, daß mehrere zweite Laschen (130, 130') an wenigstens einem Synchronring (120, 120') angebracht sind und daß mehrere Federn (132) vorgesehen sind, die jede der zweiten Laschen (130) in Richtung Schaltmuffenträger (20) ziehen und gegebenenfalls bei zweiseitiger Synchronisiereinrichtung korrespondierende Laschen (130, 130') der beidseitig zum Schaltmuffenträger (20) angeordneten Synchronringe (120, 120') miteinander verbinden.

**12.** Synchronisiereinrichtung nach einem der Ansprüche 1 bis 11, dadurch gekennzeichnet, daß der Sperreinsatz (80) Schaltanschlagmittel (98) zur Begrenzung der axialen Bewegung der Schaltmuffe (60) relativ zum Schaltmuffenträger (20) enthält, die wirksam werden, wenn der Schaltmuffenträger (20) und das Ausgangsteil (160) sich nicht relativ zueinander drehen.

**13.** Synchronisiereinrichtung nach einem der Ansprüche 1 bis 12, dadurch gekennzeichnet, daß die Vertiefung (84) derart ausgebildet ist, daß sie den Auslösemechanismus (40) und mit ihm die Schaltmuffe (60) stabil in der neutralen Stellung der Schaltanordnung hält.

**14.** Synchronisiereinrichtung nach einem der Ansprüche 1 bis 13, dadurch gekennzeichnet, daß der Sperreinsatz (80) Führungsmittel (106, 108) aufweist, die ihn relativ zu dem Schaltmuffenträger (20) oder der Schaltmuffe (60), an der der Sperreinsatz (80) angeordnet ist, festlegen.

**15.** Synchronisiereinrichtung nach einem der Ansprüche 1 bis 14, dadurch gekennzeichnet, daß der Sperreinsatz (80) Vorsprünge (86) auf seiner dem Auslösemechanismus (40) zugewandten Seite aufweist, die als Synchronanschlagmittel (100) und Blockiermittel (102) dienen.

**16.** Synchronisiereinrichtung nach Anspruch 15, dadurch gekennzeichnet, daß die Vorsprünge (86) auch als Schaltanschlagmittel (98) dienen.

**17.** Synchronisiereinrichtung nach einem der Ansprüche 1 bis 16, dadurch gekennzeichnet, daß der Sperreinsatz (80) einen ersten und einen zweiten Vorsprung (86) aufweist, die beiderseits der Vertiefung (84) angeordnet und derart ausgebildet sind, daß sie einerseits als Synchronisieranschlagmittel (100) zur Begrenzung der relativen Verdrehung zwischen Synchronring (120) und Schaltmuffenträger (20) und andererseits als Sperrmittel (102) zur Unterbrechung der axialen Bewegung der Schaltmuffe (60) relativ zum Schaltmuffenträger (20) in Richtung eines Ausgangsteiles (160), sofern kein Gleichlauf zwischen Schaltmuffenträger (20) und des in Eingriff zu bringenden Ausgangsteiles (160) erreicht ist, dienen.

**18.** Synchronisiereinrichtung nach Anspruch 17, dadurch gekennzeichnet, daß die Vorsprünge (86) so ausgebildet sind, daß sie ferner Schaltanschlagmittel (98) aufweisen, die der Begrenzung der axialen Bewegung der Schaltmuffe (60) in Richtung eines Ausgangsteiles (160) für den Fall dienen, daß bei Synchronlauf von Schaltmuffenträger (20) und Ausgangsteil (160) eine axiale Verschiebung der Schaltmuffe (60) über das Sperrmittel (102) hinaus möglich wird.

**19.** Synchronisiereinrichtung nach Anspruch 18, dadurch gekennzeichnet, daß jeder Vorsprung (86) folgende Seitenflächen aufweist:
  - eine innere Seitenfläche (92) und eine äußere Seitenfläche (94), welche im wesentlichen parallel zu einer Seite (96) des Sperreinsatzes (80) verlaufen und wobei die innere Seitenfläche (92) der Vertiefung (84) zugewandt ist,
  - Schaltanschlagseiten (98), die sich ausgehend von den Endkanten der äußeren Seitenflächen (94) im wesentlichen senkrecht zu diesen zur Mitte des Sperreinsatzes (80) erstrecken,
  - Synchronringanschlagseiten (100), die sich ausgehend von und im wesentlichen senkrecht zu den Schaltanschlagseiten (98) erstrecken und im wesentlichen parallel zu den äußeren Seitenflächen (94) verlaufen, und
  - Führungsschultern (102), welche sich zwischen den Synchronringanschlagseiten (100) und den Endkanten der inneren Seitenflächen (92) erstrecken.

**20.** Synchronisiereinrichtung nach Anspruch 19, dadurch gekennzeichnet, daß die Führungsschulter (102) im wesentlichen radial von der Mitte des Sperreinsatzes (80) ausgehend ausgerichtet ist.

21. Synchronisiereinrichtung nach einem der Ansprüche 17 bis 20, dadurch gekennzeichnet, daß jeder Sperreinsatz (80) wenigstens einen weiteren Vorsprung (108) auf seiner der Schaltmuffe (60) zugewandten Seite aufweist und die Schaltmuffe (60) eine Nut (74) aufweist, in die der Vorsprung (108) eingreifen kann, um eine axiale und radiale Verschiebung des Sperreinsatzes (80) aus der Schaltmuffe (60) heraus zu verhindern, und daß jeder Vorsprung (86) auf der dem Schaltmuffenträger (20) zugewandten Seite des Sperreinsatzes (80) eine flache obere Endfläche (104) aufweist und der Schaltmuffenträger (20) Nuten (26) aufweist, in die die flachen oberen Endflächen (104) eingreifen können, um eine radiale, zur Achse gerichtete Bewegung des entsprechenden Sperreinsatzes (80) zu verhindern.

22. Synchronisiereinrichtung nach einem der Ansprüche 19 bis 21, dadurch gekennzeichnet, daß die Laschen (128, 128') auf den Synchronringen (120, 120') schmaler als der Abstand zwischen den inneren Seiten (92) der Vorsprünge (86) auf dem Sperreinsatz (80) sind.

23. Sperreinsatz (80) für eine Synchronisiereinrichtung nach Anspruch 1 bestehend aus:
- einem im wesentlichen rechteckigen flachen Hauptkörper (82) mit einer Außen- und einer Innenseite, einer Vorderseite (88) und einer Hinterseite (88), zwei weiteren Seiten (96) und einem Zentrum,
- einer Führungsvertiefung (84) auf der Außenseite des Hauptkörpers (82), welche sich annähernd von der Vorderseite (88) bis annähernd der Hinterseite (88) erstreckt,
- und zwei auf der Außenseite des Hauptkörpers (82) jeweils im Bereich einer der beiden Seiten (96) des Hauptkörpers (82) angeformten Anschlagvorsprüngen (86), welche wenigstens folgende Seitenflächen aufweisen:
i) eine innere Seitenfläche (92) und eine äußere Seitenfläche (94), die im wesentlichen parallel zu der zugehörigen Seite (96) des Hauptkörpers (82) ausgerichtet sind, wobei die innere Seitenfläche (92) zur Seite (96) des Hauptkörpers (82) beabstandet ist,
ii) eine vordere Seitenfläche (98) und eine hintere Seitenfläche (98), die sich an die Endkanten der äußeren Seitenflächen (94) anschließen und senkrecht zu diesen ausgerichtet sind,
iii) vordere und hintere Zwischenseitenflächen (100), die sich an die Endkanten der Vorder- bzw. Hinterseitenfläche (98) anschließen und senkrecht zu diesen ausgerichtet sind, wobei die vordere und hintere Zwischenseitenfläche (100) zu der äußeren Seitenfläche (94) um einen kleineren Betrag beabstandet sind als zu der inneren Seitenfläche (92),
iv) vordere und hintere Schrägflächen (102), welche sich zwischen den Enden der vorderen bzw. hinteren Zwischenseitenflächen (100) und den Endkanten der inneren Seitenflächen (92) erstrecken.

24. Sperreinsatz nach Anspruch 23, gekennzeichnet durch ein Auslöseloch (90) in der Mitte des Hauptkörpers (82), das sich von der Außenseite zur Innenseite des Hauptkörpers (82) erstreckt, wobei die inneren Seitenflächen (92) der Sperrvorsprünge (86) und der Rand des Auslöseloches (90) zueinander beabstandet sind.

25. Sperreinsatz nach Anspruch 23 oder 24, dadurch gekennzeichnet, daß auf der Innenseite des Hauptkörpers (82) ein erster Orientierungsvorsprung (106) angeformt ist, der sich von der Vorder- zur Hinterseite (88) des Hauptkörpers (82) erstreckt und im wesentlichen die Form eines Zylindersegmentes einnimmt, daß ferner auf der Innenseite des Hauptkörpers (82) je ein zweiter und dritter im wesentlichen rechteckförmiger Orientierungsvorsprung (108) angeformt sind, die sich von einer Seite (96) des Hauptkörpers (82) zum Zentrum desselben erstrecken, und daß ferner Nuten (110) in der Innenseite des Hauptkörpers (82) beiderseits der zweiten und dritten Orientierungsvorsprünge (108) verlaufen.

26. Sperreinsatz nach einem der Ansprüche 23 bis 25, dadurch gekennzeichnet, daß der Hauptkörper (82) ausgehend von einer Seite (92) zur anderen Seite (92) leicht gekrümmt ausgebildet ist.

27. Sperreinsatz nach einem der Ansprüche 23 bis 26, dadurch gekennzeichnet, daß die Führungsvertiefung (84) ausgehend von der Vorderseite (88) bzw. der Hinterseite (88) zum Zentrum des Hauptkörpers an Tiefe und Breite zunimmt.

28. Sperreinsatz nach einem der Ansprüche 23 bis 27, dadurch gekennzeichnet, daß die Schrägflächen (102) der Vorsprünge (86) im wesentlichen radial von dem Zentrum des Sperreinsatzes (80) ausgehend ausgerichtet sind.

## Claims

1. A synchronising device for a synchromesh gearbox with a selector hub (20), a selector sleeve (60) which is arranged rotationally fast with but axially slidable relative to the selector hub (20), at least one output part (160) which can rotate relative to the selector hub (20), at least one input friction element (120, 142) which can rotate relative to both the selector hub (20) and the output part (160), at least one output friction element (144) which is rotationally fast with the output part (160), at least one actuating mechanism (40) which is fitted to either the selector hub (20) or to the selector sleeve (60) and is biased against the other part (20, 60) and which through axial movement of the selector sleeve (60) in the direction of the input friction element (120, 142) so acts thereon that it is brought into frictional engagement with the output friction element (144), and with at least one blocking insert (80) which is fixed to the other part (20, 60) at a location where the actuating mechanism (40) engages in such a way that the actuating mechanism (40) is pre-tensioned and presses against the associated blocking insert (80), wherein the blocking insert (80) comprises a recess (84) which serves to guide the associated actuating mechanism (40) on axial displacement of the sleeve (60) relative to the selector hub (20), synchro-stop means (100) for limiting the rotation of the input friction element (120, 142) relative to the selector hub (20) and blocking means (102) for limiting the axial movement of the selector sleeve (60) relative to the selector hub (20) so long as the selector hub (20) and the output part (160) rotate relative to each other, characterized in that the input friction element (120, 142) has at least one projecting tongue (128) which can be brought into engagement with the at least one actuating mechanism (40), in order to engage the input friction element (120, 142), and in that the blocking means (102) of the blocking insert (80) cooperate with the tongue (128) to limit the axial movement of the selector sleeve (60).

2. A synchronising device according to claim 1, characterized in that the at least one actuating mechanism (40) is so formed that it presses against the corresponding tongue (128) on axial movement of the selector sleeve (60) in the direction of the output part (160), whereupon the at least one input friction element (120, 142) is pressed against the at least one output friction element (144).

3. A synchronising device according to claim 1 or 2, characterized in that the at least one actuating mechanism (40) and the at least one blocking insert (80) are fixed to the selector hub (20) and the selector sleeve (60) respectively.

4. A synchronising device according to claim 3, characterized in that a plurality of actuating mechanisms (40) are distributed over the periphery of the selector hub (20) and extend substantially radially, and in that a corresponding plurality of blocking inserts (80) are arranged on an inner periphery of the selector hub.

5. A synchronising device according to any of claims 1 to 4, characterized in that the at least one input friction element comprises a synchronising ring (120) and a plurality of clutch discs (142) connected thereto for rotation in common, in that the at least one tongue (128) is formed on the synchronising ring (120) and in that the at least one output friction element includes a plurality of separating discs (144) which are interleaved with the clutch discs (142).

6. A synchronising device according to claim 5, characterized in that the synchronising ring (120) consists of a dish-shaped metal ring and the at least one tongue (128) is formed by bending back an edge region of the synchronising ring (120).

7. A synchronising device according to claim 6, characterized in that the at least one tongue (128) is U-shaped and a free end of the U cooperates with the corresponding actuating mechanism (40).

8. A synchronising device according to any of claims 1 to 7, characterized in that it is two-sided and includes at least one further output part (160'), at least one additional input friction element (120', 142') and at least one additional output friction element (144'), the mutually corresponding parts being arranged relative to the axis of rotation on the two sides of and symmetrical relative to the selector hub (20) and the selector sleeve (60) being adapted to be brought selectively into engagement with either one of the output parts (160, 160').

9. A synchronising device according to any of claims 1 to 8, characterized in that return means (132) are provided for biasing the at least one input friction element (120, 142) and if present the at least one additional input friction element (120', 142') in the direction of the selector hub (20).

10. A synchronising device according to claim 9, characterized in that at least one additional tongue (130, 130') is provided on each input friction element (120, 142; 120', 142') and in that the return means consists of at least one spring (132) connecting and drawing together the additional tongues (130, 130') of the opposed input elements (120, 142; 120', 142').

11. A synchronising device according to any of claims 1 to 10, characterized in that a plurality of second tongues (130, 130') are fitted on at least one synchronising ring (120, 120') and in that a plurality of springs (132) are provided, each drawing the second tongues (130) in the direction of the selector hub (20) and in the case of a two-sided synchronising device connecting together corresponding tongues (130, 130') of the synchronising rings (120, 120') arranged on the two sides of the selector hub (20).

12. A synchronising device according to any of claims 1 to 11, characterized in that the blocking insert (80) has shift stop means (98) for limiting the axial movement of the selector sleeve (60) relative to the selector hub (20) and which become effective when the selector hub (20) and the output part (160) do not rotate relative to one another.

13. A synchronising device according to any of claims 1 to 12, characterized in that the recess (84) is so formed that it retains the actuating mechanism (40) and together therewith holds the selector sleeve (60) stably in the neutral position of the selector device.

14. A synchronising device according to any of claims 1 to 13, characterized in that the blocking insert (80) has guide means (106, 108) which fix it in place relative to the selector hub (20) or the selector sleeve (60) on which the blocking insert (80) is arranged.

15. A synchronising device according to any of claims 1 to 14, characterized in that the blocking insert (80) has projections (86) on the side facing the actuating mechanism (40), which serve as the synchro-stop means (100) and the blocking means (102).

16. A synchronising device according to claim 15, characterized in that the projections (86) also serve as shift stop means (98).

17. A synchronising device according to any of claims 1 to 16, characterized in that the blocking insert (80) has a first and a second projection (86), which are arranged on the two sides of the recess (84) and are so formed that they serve on the one hand as synchro-stop means (100) for limiting the relative rotation between the synchronising ring (120) and the selector hub (20) and on the other hand as the blocking means (102) for interrupting the axial movement of the selector sleeve (60) relative to the selector hub (20) in the direction of an output part (160) so long as there is no synchronism between the selector hub (20) and the output part (160) to be brought into engagement.

18. A synchronising device according to claim 17, characterized in that the projections (86) are so formed that the further have shift stop means (98) which serve to limit the axial movement of the selector sleeve (60) in the direction of an output part (160) in the situation when, with synchronous running of the selector hub (20) and the output part (160), axial shifting of the selector sleeve (60) beyond the blocking means (102) is possible.

19. A synchronising device according to claim 18, characterized in that each projection (86) has the following side surfaces:
an inner side surface (92) and an outer side surface (94) which extend substantially parallel to a side of the blocking insert (80) and wherein the inner side surface (92) faces the recess (84),
shift stop sides (98) which run from the ends of the outer side surfaces (94) substantially perpendicular to these towards the centre of the blocking insert (80),
synchronising ring stop sides (100), which extend from the shift stop sides (98) substantially perpendicular thereto and substantially parallel to the outer side surfaces (94), and
guide shoulders (102) which extend between the synchronising ring stop sides (100) and the ends of the inner side surfaces (92).

20. A synchronising device according to claim 19, characterized in that the guide shoulder (102) is aligned in a substantially radial direction from the centre of the blocking insert (80).

21. A synchronising device according to any of claims 17 to 20, characterized in that each blocking insert (80) has at least one further projection (108) on its side facing the selector sleeve (60) and the selector sleeve (60) has a groove (74) in which the projection (108) can engage, in order to prevent axial and radial displacement of the blocking insert (80) out of the selector sleeve (60), and in that each projection (86) on the side of the blocking insert (80) facing the selector hub (20) has a flat top surface (104) and the selector hub (20) has grooves (26) in which the flat top surfaces (104) can engage, in order to prevent radial movement of the corresponding blocking insert towards the axis.

22. A synchronising device according to any of claims 19 to 21, characterized in that the tongues (128, 128') on the synchronising rings are narrower than the spacing between the inner sides (92) of the projections (86) on the blocking insert (80).

23. A blocking insert for a synchronising device according to claim 1, consisting of:
a substantially rectangular, flat main body (82) with an outer and an inner face, a front side (88) and a rear side (88), two further sides (96) and a centre,
a guide recess (84) on the outer face of the main body (82), extending approximately from the front side (88) to approximately the rear side (88),
and two abutment projections (86) formed on the outer face of the main body (82), in the region of the two sides (96) respectively of the main body (82), which projections have at least the following side surfaces:
    i) an inner side surface (92) and an outer side surface (94), which are aligned substantially parallel to the associated sides (96) of the main body (82), wherein the inner side surface (92) is spaced from the side (96) of the main body (82),
    ii) a front side surface (98) and a rear side surface (98), which adjoin the ends of the outer side surfaces (94) and are aligned perpendicular to these,
    iii) front and rear intermediate side surfaces (100) which adjoin the ends of the front and rear side surfaces (98) and are aligned perpendicular to these, wherein the front and rear intermediate side surfaces (100) are spaced a smaller amount from the outer side surface (94) than from the inner side surfaces (92),
    iv) front and rear inclined surfaces (102) which extend between the ends of the front and rear intermediate side surfaces (100) and the ends of the inner side surfaces (92).

24. A blocking insert according to claim 23, characterized by an actuating hole (90) in the middle of the main body (82), extending from the outer face to the inner face of the main body (82), the inner side surfaces (92) of the locking projections (86) and the edge of the actuating hole (90) being spaced from one another.

25. A blocking insert according to claim 23 or 24, characterized in that a first orientating projection (106) is formed on the inner face of the main body (82), extending from the front to the rear side (88) of the main body (82) and having substantially the shape of a segment of a cylinder, in that further on the inner face of the main body (82) a second and a third substantially rectangular orientating projection (108) are formed, which extend from one side of the main body (82) to the centre thereof, and further in that grooves (110) extend in the inner face of the main body (82) to either side of the second and third orientating projections (108).

26. A blocking insert according to any of claims 23 to 25, characterized in that the main body (82) is slightly curved from one side (92) to the other side (92).

27. A blocking insert according to any of claims 23 to 26, characterized in that the guide recess (84) increases in depth and width going both from the front side (88) and the rear side (88) to the centre of the main body.

28. A blocking insert according to any of claims 23 to 27, characterized in that the inclined surfaces (102) of the projections (86) are aligned substantially radially from the centre of the blocking insert (80).

**Revendications**

1. Synchroniseur pour boîtes de vitesses synchronisées, comportant un support de manchon de commutation (20), un manchon de commutation (60) disposé à solidarité de rotation et coulissement axial relativement au support de manchon de commutation (20), au moins une pièce de sortie (160) pouvant être mise en rotation relativement au support de manchon de commutation (20), au moins un élément de friction d'entrée (120, 142) pouvant être mis en rotation relativement tant au support de manchon de commutation (20) qu'à la pièce de sortie (160), au moins un élément de friction de sortie (144) assemblé solidairement en rotation à la pièce de sortie (160), au moins un mécanisme de déclenchement (40), qui est installé sur le support de manchon de commutation (20) ou sur le manchon de commutation (60) et est bloqué contre l'autre pièce respective (20, 60) et qui, par un déplacement axial du manchon de commutation (60) en direction de l'élément de friction d'entrée (120, 142), influence ce dernier de telle sorte qu'il est amené en liaison de friction avec l'élément de friction de sortie (144), et comportant au moins une pièce rapportée de verrouillage (80), fixée sur l'autre pièce (20, 60) à l'endroit où agit le mécanisme de déclenchement (40), de sorte que le mécanisme de déclenchement (40) est précontraint et exerce une pression contre la pièce rapportée de verrouillage associée (80), la pièce rapportée de verrouillage (80) présentant un renfoncement (84) pour guider la pièce rapportée de verrouillage associée (80) lors du coulissement axial du manchon (60) relativement au support de manchon de commutation (20), des moyens de butée de synchronisation (100) pour limiter la rotation de l'élément de friction d'entrée (120, 142) relativement au support de manchon de commutation (20) et des moyens de blocage (102) pour limiter le déplacement axial du manchon de commutation (60) relativement au support de manchon de commutation (20), dans la mesure où le support de manchon de commutation (20) et la pièce de sortie (160) sont en rotation relative, **caractérisé** en ce que l'élément de friction d'entrée (120, 142) présente au moins une patte en saillie (128), qui peut être amenée en engagement avec le mécanisme de déclenchement correspondant (40) afin d'accoupler l'élément de friction d'entrée (120, 142), et en ce que les moyens de blocage (102) de la pièce rapportée de verrouillage (80) coopèrent avec la patte (128) pour limiter le mouvement axial du manchon de commutation (60).

2. Synchroniseur selon la revendication 1, caractérisé en ce que le ou les mécanismes de déclenchement (40) sont conçus de telle sorte qu'ils exercent une pression contre la patte correspondante (128) lors du déplacement axial du manchon de commutation (60) en direction de la pièce de sortie (160), à la suite de quoi le ou les éléments de friction d'entrée (120, 142) sont pressés contre le ou les éléments de friction de sortie (144).

3. Synchroniseur selon la revendication 1 ou 2, caractérisé en ce que le ou les mécanismes de déclenchement (40) peuvent être fixés sur le support de manchon de commutation (20) et la ou les pièces rapportées de verrouillage (80) sur le manchon de commutation (60).

4. Synchroniseur selon la revendication 3, caractérisé en ce que plusieurs mécanismes de déclenchement (40) sont répartis sur la circonférence du support de manchon de commutation (20) et s'étendent sensiblement radialement, et en ce que plusieurs pièces rapportées de verrouillage (80) sont disposées d'une manière correspondante sur une circonférence intérieure du manchon de commutation.

5. Synchroniseur selon l'une des revendications 1 à 4, caractérisé en ce que le ou les éléments de friction d'entrée comprennent une bague-synchro (120) et plusieurs disques d'accouplement (142) qui lui sont reliés en rotation conjointe, en ce que la ou les pattes (128) sont formées sur la bague-synchro (120) et en ce que le ou les éléments de friction de sortie (144) comprennent plusieurs disques de séparation (144), qui sont intercalés dans les disques d'accouplement (142).

6. Synchroniseur selon la revendication 5, caractérisé en ce que la bague-synchro (120) est une bague métallique en forme de pot et la ou les pattes (128) sont formées en recourbant une région de bord de la bague-synchro (120).

7. Synchroniseur selon la revendication 6, caractérisé en ce que la ou les pattes (128) sont en forme de U et une extrémité libre du U coopère avec le mécanisme de déclenchement correspondant (40).

8. Synchroniseur selon l'une des revendications 1 à 7, caractérisé en ce qu'il est bilatéral et contient au moins une pièce de sortie supplémentaire (160'), au moins un élément de friction d'entrée supplémentaire (120', 142') et au moins un élément de friction de sortie supplémentaire (144'), les pièces respectivement correspondantes étant disposées de part et d'autre de l'axe de rotation et symétriquement au support de manchon de commutation (20), et le manchon de commutation (60) pouvant être amené au choix en engagement avec l'une des pièce de sortie (160, 160').

9. Synchroniseur selon l'une des revendications 1 à 8, caractérisé en ce que des moyens de rappel (132) sont prévus pour précontraindre le ou les éléments de friction d'entrée (120, 142), et éventuellement le ou les éléments de friction d'entrée supplémentaires (120', 142'), en direction du support de manchon de commutation (20).

10. Synchroniseur selon la revendication 9, caractérisé en ce qu'au moins une patte supplémentaire (130, 130') est prévue sur chaque élément de friction d'entrée (120, 142; 120', 142'), et en ce que les moyens de rappel consistent en un ou plusieurs ressorts (132), qui relient et tirent les unes vers les autres les pattes supplémentaires (130, 130') des éléments d'entrée en vis-à-vis (120, 142; 120', 142').

11. Synchroniseur selon l'une des revendications 1 à 10, caractérisé en ce que plusieurs deuxièmes pattes (130, 130') sont prévues sur au moins une bague-synchro (120, 120') et en ce que plusieurs ressorts (132) sont prévus, qui tirent chacune des deuxièmes pattes (130) en direction du support de manchon de commutation (20) et éventuellement, pour un synchroniseur bilatéral, relient entre elles les pattes correspondantes (130, 130') des bagues-synchro (120, 120') disposées de part et d'autre du support de manchon de commutation (20).

12. Synchroniseur selon l'une des revendications 1 à 11, caractérisé en ce que la pièce rapportée de verrouillage (80) contient des moyens de butée de commutation (98) pour limiter le déplacement axial du manchon de commutation (60) relativement au support de manchon de commutation (20), qui deviennent actifs si le support de manchon de commutation (20) et la pièce de sortie (160) ne sont pas en rotation relative.

13. Synchroniseur selon l'une des revendications 1 à 12, caractérisé en ce que le renfoncement (84) est conçu de telle sorte qu'il maintient de manière stable le mécanisme de déclenchement (40), et avec lui le manchon de commutation (60), dans la position neutre de l'ensemble de commutation.

14. Synchroniseur selon l'une des revendications 1 à 13, caractérisé en ce que la pièce rapportée de verrouillage (80) présente des moyens de guidage (106, 108) qui la fixent en position relativement au support de manchon de commutation (20) ou au manchon de commutation (60), sur lequel est disposée la pièce rapportée de verrouillage (80).

15. Synchroniseur selon l'une des revendications 1 à 14, caractérisé en ce que la pièce rapportée de verrouillage (80) présente des saillies (86) sur son côté tourné vers le mécanisme de déclenchement (40), qui servent de moyens de butée de synchronisation (100) et de moyens de blocage (102).

16. Synchroniseur selon la revendication 15, caractérisé en ce que les saillies (86) servent également de moyens de butée de commutation (98).

17. Synchroniseur selon l'une des revendications 1 à 16, caractérisé en ce que la pièce rapportée de verrouillage (80) présente une première et une seconde saillies (86), disposées de part et d'autre du renfoncement (84) et conçues de telle sorte qu'elles servent d'une part de moyens de butée de synchronisation (100) pour limiter la rotation relative entre la bague-synchro (120) et le support de manchon de commutation (20), et d'autre part de moyens de blocage (102) pour interrompre le déplacement axial du manchon de commutation (60) relativement au support de manchon de commutation (20) en direction d'une pièce de sortie (160), en l'absence d'un synchronisme entre le support de manchon de commutation (20) et la pièce de sortie (160) à amener en engagement.

18. Synchroniseur selon la revendication 17, caractérisé en ce que les saillies (86) sont conçues de telle sorte qu'elles présentent en outre des moyens de butée de commutation (98), pour limiter le déplacement axial du manchon de commutation (60) en direction d'une pièce de sortie (160) pour le cas où, en présence d'un synchronisme entre le support de manchon de commutation (20) et la pièce de sortie (160), le manchon de commutation (60) peut coulisser au-delà des moyens de blocage (102).

19. Synchroniseur selon la revendication 18, caractérisé en ce que chaque saillie (86) présente les faces latérales suivantes :
- une face latérale intérieure (92) et une face latérale extérieure (94), qui s'étendent sensiblement parallèlement à un côté (96) de la pièce rapportée de verrouillage (80), la face latérale intérieure (92) étant tournée vers le renfoncement (84),
- des côtés de butée de commutation (98) qui, partant des arêtes terminales des faces latérales extérieures (94), s'étendent sensiblement perpendiculairement à ces dernières vers le milieu de la pièce rapportée de verrouillage (80),

- des côtés de butée de bague-synchro (100) qui, partant des côtés de butée de commutation (98) et s'étendant sensiblement perpendiculairement à ces derniers, s'étendent sensiblement parallèlement aux faces latérales extérieures (94), et

- des épaulements de guidage (102), qui s'étendent entre les côtés de butée de bague-synchro (100) et les arêtes terminales des faces latérales intérieures (92).

20. Synchroniseur selon la revendication 19, caractérisé en ce que les épaulements de guidage (102) sont orientés sensiblement radialement, en partant du milieu de la pièce rapportée de verrouillage (80).

21. Synchroniseur selon l'une des revendications 17 à 20, caractérisé en ce que chaque pièce rapportée de verrouillage (80) présente au moins une saillie supplémentaire (108) sur son côté tourné vers le manchon de commutation (60) et le manchon de commutation (60) présente une rainure (74), dans laquelle peut s'engager la saillie (108) afin d'empêcher un coulissement axial et radial de la pièce rapportée de verrouillage (80) hors du manchon de commutation (60), et en ce que chaque saillie (86) présente une face terminale supérieure plate (104) sur le côté tourné vers le support de manchon de commutation (20) et le support de manchon de commutation (20) présente des rainures (26), dans lesquelles peuvent s'engager les faces terminales supérieures plates (104) afin d'empêcher un déplacement radial, dirigé vers l'axe, de la pièce rapportée de verrouillage correspondante (80).

22. Synchroniseur selon l'une des revendications 19 à 21, caractérisé en ce que les pattes (128, 128') sur les bagues-synchro (120, 120') sont plus étroites que la distance entre les côtés intérieurs (92) des saillies (86) sur la pièce rapportée de verrouillage (80).

23. Pièce rapportée de verrouillage (80) pour un synchroniseur selon la revendication 1, constituée de :

- un corps principal (82), plat et sensiblement rectangulaire, avec un côté extérieur et un côté intérieur, un côté avant (88) et un côté arrière (88), deux autres côtés (96) et un centre,

- un renfoncement de guidage (84), sur le côté extérieur du corps principal (82), qui s'étend pratiquement du côté avant (88) au côté arrière (88),

- et deux saillies de butée (86), qui sont formées sur le côté extérieur du corps principal (82), chacune dans la région d'un des deux côtés (96) de ce dernier, et qui présentent au moins les faces latérales suivantes :

  i) une face latérale intérieure (92) et une face latérale extérieure (94), orientées sensiblement parallèlement au côté associé (96) du corps principal (82), la face latérale intérieure (92) étant distante du côté (96) du corps principal (82),

  ii) une face latérale avant (98) et une face latérale arrière (98), qui se raccordent aux arêtes terminales des faces latérales extérieures (94) et sont orientées perpendiculairement à ces dernières,

  iii) des faces latérales intermédiaires avant et arrière (100), qui se raccordent aux arêtes terminales des faces latérales avant ou arrière (98) et sont orientées perpendiculairement à ces dernières, les faces latérales intermédiaires avant et arrière (100) étant moins distantes de la face latérale extérieure (94) que de la face latérale intérieure (92),

  iv) des faces obliques avant et arrière (102), qui s'étendent entre les extrémités des faces latérales intermédiaires avant ou arrière (100) et les arêtes terminales des faces latérales intérieures (92).

24. Pièce rapportée de verrouillage selon la revendication 23, caractérisée par un trou de déclenchement (900, au milieu du corps principal (82), qui s'étend du côté extérieur au côté intérieur du corps principal (82), les faces latérales intérieures (92) des saillies de verrouillage (86) et le bord du trou de déclenchement (90) étant mutuellement distants.

25. Pièce rapportée de verrouillage selon la revendication 23 ou 24, caractérisée en ce qu'une première saillie d'orientation (106) est formée sur le côté intérieur du corps principal (82), qui s'étend du côté avant au côté arrière (88) du corps principal (82) et prend sensiblement la forme d'un segment cylindrique, en ce qu'une seconde et une troisième saillies d'orientation sensiblement rectangulaires (108) sont en outre formées sur le côté intérieur du corps principal (82), qui s'étendent d'un côté (96) du corps principal (82) au centre de ce dernier, et en ce que des rainures (110) s'étendent en outre dans le côté intérieur du corps principal (82), de part et d'autre de la deuxième et troisième saillies d'orientation (108).

26. Pièce rapportée de verrouillage selon l'une des revendications 23 à 25, caractérisée en ce que le corps principal (82) est légèrement cintré d'un côté (92) à l'autre côté (92).

27. Pièce rapportée de verrouillage selon l'une des revendications 23 à 26, caractérisée en ce que le renfoncement de guidage (84) augmente en profondeur et largeur du côté avant ou arrière (88) au centre du corps principal.

28. Pièce rapportée de verrouillage selon l'une des revendications 23 à 27, caractérisée en ce que les faces obliques (102) des saillies (86) sont orientées sensiblement radialement, en partant du centre de la pièce rapportée de verrouillage (80).

Fig. 1

Fig. 2

Fig. 7

Fig. 4

Fig. 6

Fig. 3

Fig. 5

Fig. 8

Fig. 13

Fig. 12

Fig. 10

Fig. 11

Fig. 9